# FASCICULE DE BREVET EUROPEEN

(11) **EP 3 594 056 B1**
(45) Date de publication et mention de la délivrance du brevet: **28.04.2021**
(21) Numéro de dépôt: 19185788.7
(22) Date de dépôt: 11.07.2019
(51) Int. Cl.: B60P 3/03

(54) **SAS AMOVIBLE PALETTISABLE**
PALETTISIERBARER ENTFERNBARER WINDFANG
PALLETISABLE REMOVABLE AIR LOCK

(30) Priorité: 11.07.2018 FR 1856383
(43) Date de publication de la demande: 15.01.2020
(73) Titulaire: OBERTHUR CASH PROTECTION, 21000 DIJON (FR)
(72) Inventeur: MARSAUD, Erwan, 21490 SAINT JULIEN (FR); LAMURE, Alexandre, 01150 LAGNIEU (FR); SAUSSARD, Philippe, 21490 VAROIS ET CHAIGNOT (FR)
(74) Mandataire: Oudin, Stéphane

(56) Documents cités:
- EP-A1- 1 690 733
- DE-A1-102010 030 775

## Description

### Domaine technique

La présente invention se rapporte au domaine général de la protection de marchandises de valeur, plus particulièrement la protection des marchandises dans les locaux ou lors de tournées logistiques dans un véhicule.

L'invention concerne plus particulièrement un dispositif se comportant comme un sas ou une barrière pour bloquer un accès à un local ou véhicule contenant des marchandises de valeur
Le document DE 10 2010 030775 A1 divulgue l'objet du préambule de la revendication indépendante 1.

### Technique antérieure

Dans le domaine de la protection de marchandises de valeur lors de leur transport et/ou de leur stockage, on connaît des véhicules ou locaux sécurisés comportant une ou plusieurs portes d'accès avantageusement renforcées et munies de serrures de sécurité et de détecteurs d'ouverture pouvant détecter et signaler une ouverture non autorisée desdites portes lors d'un vol ou tentative de vol desdites marchandises contenues dans lesdits véhicules ou locaux sécurisés.

Ce type de portes renforcées est certes très efficace mais présente toutefois plusieurs inconvénients.

Tout d'abord, ce type de portes ne peut pas être mis en œuvre sur tous les types de véhicules ou locaux sécurisés. De plus, ce type de portes est généralement lourd et onéreux du fait de sa conception compliquée. Enfin, une fois la porte sécurisée franchie, le voleur a directement accès aux marchandises contenues dans les véhicules ou locaux sécurisés.

### Exposé de l'invention

Le but de la présente invention est de proposer un dispositif de blocage d'un accès à un entrepôt, du type local ou véhicule, contenant des marchandises de valeur, ledit dispositif étant amovible, facilement stockable, transportable et mis en œuvre dans la plupart des locaux ou véhicules de transport et/ou de stockage de marchandises de valeur et pouvant en outre se comporter comme un sas.

Conformément à l'invention, il est donc proposé un dispositif de blocage d'un accès à un entrepôt contenant des marchandises de valeur, ledit accès étant disposé derrière la porte d'entrée dudit entrepôt et comportant au moins un plancher et deux parois verticales opposées, ledit dispositif étant remarquable en ce qu'il comporte au moins :
- un châssis agencé pour reposer sur ledit plancher entre les parois verticales,
- un volet arrière solidaire de l'arrière d'une des faces latérales du châssis et mobile entre une position "déployé" dans laquelle chaque volet arrière s'étend sensiblement perpendiculairement à ladite face latérales et une position "rétracté" dans laquelle chaque volet arrière ne s'étend pas sensiblement perpendiculairement à ladite face latérale et,
- des moyens d'arrimage arrière permettant de maintenir chaque volet arrière en position "déployé" et d'immobiliser ledit châssis par rapport à l'accès de ladite remorque, ledit dispositif étant, lorsque chaque volet arrière est en position "rétracté", en configuration "passage" libérant l'accès et, lorsque ledit volet arrière est en position "déployé", en configuration "blocage" bloquant l'accès et formant un sas.

Selon un mode de réalisation préféré, le dispositif comporte au moins :
- un volet avant solidaire de l'avant de ladite face latérale et mobile entre une position "déployé" dans laquelle chaque volet avant s'étend sensiblement perpendiculairement à ladite face latérale et une position "rétracté" dans laquelle chaque volet avant ne s'étend pas sensiblement perpendiculairement à ladite face latérale et,
- des moyens d'arrimage avant permettant de maintenir chaque volet avant en position "déployé" et d'immobiliser ledit châssis par rapport à l'accès de ladite remorque, ledit dispositif étant, lorsque lesdits volets arrière et avant sont en position "rétractés", en configuration "passage" libérant l'accès et, lorsque lesdits volets arrière et avant sont en position "déployés", en configuration "blocage" bloquant l'accès et formant un sas entre lesdits volets arrière et avant.

De manière avantageuse, le dispositif comporte :
- deux volets arrière solidaires chacun de l'arrière d'une des faces latérales du châssis, et
- deux volets avant solidaires chacun de l'avant d'une des faces latérales du châssis.

De manière préférée, les volets arrière et/ou avant sont articulés chacun respectivement le long d'un des deux bords verticaux arrière et/ou avant dudit châssis et les moyens d'arrimage arrière et/ou avant sont des bras d'arrimage arrière et avant agencés pour être déployés transversalement depuis une des faces latérales du châssis pour venir en appui contre l'une des parois verticales de l'accès afin d'immobiliser le dispositif dans l'accès, et maintenir respectivement les volets arrière et avant en position "déployés".

Le dispositif comporte alors de préférence quatre bras d'arrimage arrière et quatre bras d'arrimage avant répartis en haut et en bas du châssis à proximité respectivement de ses bords verticaux arrière et avant.

Les bras d'arrimage arrière et avant sont avantageusement des tubes creux ou non rapportés et fixés de façon démontable par l'une de leurs extrémités sur les faces latérales du châssis et plus particulièrement dans des orifices aménagés dans une barre dudit châssis.

Les bras d'arrimage arrière et avant peuvent en outre être télescopiques, coulissants, articulés audit châssis, traversant le châssis de part en part et s'étendant de part et d'autre de ce dernier, ou encore une combinaison des différents modes de réalisation précédents.

De manière avantageuse, les bras d'arrimage arrière et avant sont associés à des organes d'interface fixés sur la ou les parois de l'accès et aptes à coopérer avec les extrémités libres desdits bras d'arrimage arrière et avant, les organes d'interface sont des barres munies d'orifices et chacun desdits bras d'arrimage arrière et avant comporte à son extrémité libre un doigt d'indexage rétractable apte à s'insérer dans l'un des orifices de l'organe d'interface associé, ledit doigt d'indexage étant associé à un ressort de rappel tendant à le maintenir non rétracté.

Le bord vertical libre de chacun des volets arrière et avant comporte de préférence un organe déformable pour éviter tout contact direct avec les parois verticales de l'accès.

De manière avantageuse, le dispositif comporte au moins l'un des moyens techniques suivants:
- des moyens de leurres,
- des moyens de dissuasion,
- des moyens de retardement pour ralentir un voleur voulant accéder aux marchandises, ou gêner la manipulation desdites marchandises ou du dispositif lui-même,
- des moyens de suivi,
- des moyens de communication,
- des moyens d'autonomie d'énergie,
- des moyens d'alimentation énergétique, ou encore
- des moyens d'interface permettant l'échange d'information filaire ou non avec le dispositif.

Ainsi, le dispositif est apte, en position "blocage", à être armé pour réagir, en cas d'intrusion ou de tentative d'intrusion non autorisée dans l'entrepôt par la porte d'entrée, en déclenchant les moyens de retardement, afin de ralentir un voleur voulant accéder aux marchandises contenue dans l'entrepôt.

Le dispositif a de préférence la forme globale d'un parallélépipède verticalement allongé disposé sur une palette dont les dimensions hors-tout au sol ne dépassent pas celles d'une palette européenne standard.

### Description sommaire des figures

D'autres avantages et caractéristiques ressortiront mieux de la description qui va suivre d'un mode d'exécution d'un dispositif de condamnation d'accès selon l'invention en référence aux figures annexées sur lesquelles :
- la figure 1 est une vue en perspective partielle d'un dispositif de blocage de l'accès selon l'invention en configuration "blocage" mis en œuvre à l'intérieur d'une remorque d'un véhicule ;
- la figure 2 est une vue de détail agrandie du dispositif de la figure 1 ;
- la figure 3 est une vue en perspective d'un dispositif de blocage de l'accès selon l'invention seul en configuration "passage" ;
- la figure 4 est une vue en perspective du dispositif de la figure 3 en configuration "blocage".

### Meilleure manière de réaliser l'invention technique

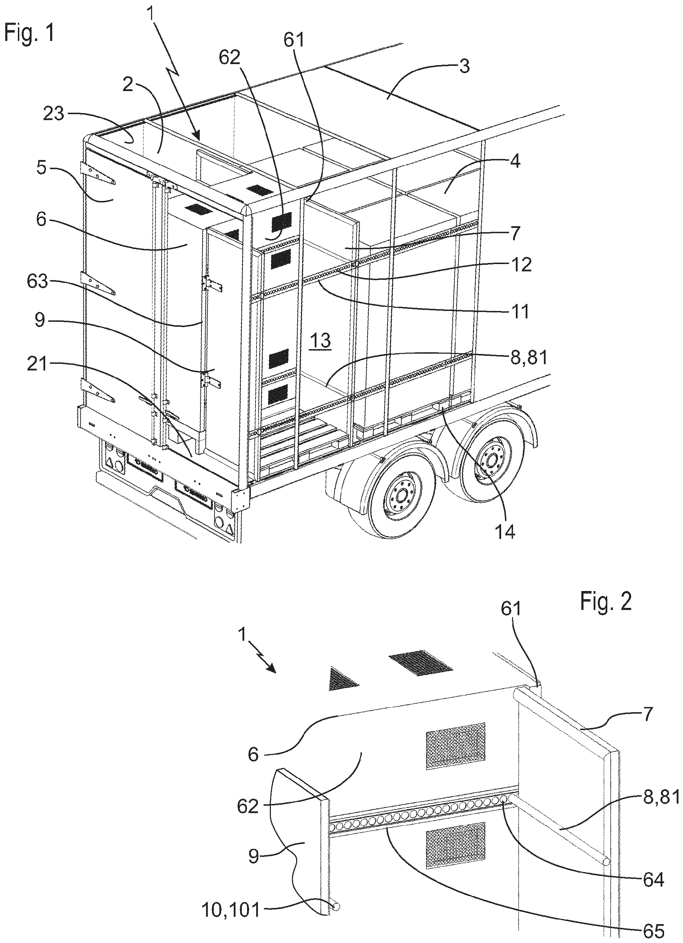

En référence aux figures 1 à 4, l'invention concerne un dispositif 1 de blocage d'un accès 2 d'un entrepôt 3 contenant des marchandises de valeur 4 et muni d'une porte d'entrée 5, ledit accès 2 étant avantageusement disposé derrière la porte d'entrée 5 et comportant un plancher 21 ou sol, un plafond et deux parois 23 verticales opposées reliant entre eux lesdits plancher 21 et plafond.

Ledit dispositif 1 est composé d'éléments mobiles de sorte à pouvoir passer d'une configuration "passage" dans laquelle l'accès 2 est libéré pour permettre à un utilisateur d'accéder aux marchandises 4 contenues dans l'entrepôt 3 à une configuration "blocage" dans laquelle l'accès 2 est bloqué pour interdire à un utilisateur d'accéder auxdites marchandises 4.

Dans l'exemple de réalisation décrit ci-après et représenté sur lesdites figures, ledit entrepôt 3 est une remorque d'un véhicule et l'accès 2 est formé par le plancher 21, un plafond et deux parois 23 verticales opposées de la partie avant de ladite remorque 3 munie de la porte d'entrée 5, les marchandises 4 étant principalement stockées à l'arrière de ladite remorque 3.

On désigne ici par "avant" les éléments ou parties d'éléments disposés du côté de la porte d'entrée 5 permettant d'entrer à l'intérieur de l'entrepôt 3, ici la remorque 3, et par "arrière" les éléments ou parties d'éléments disposés du côté opposé.

Toutefois, on comprend bien que le dispositif 1 conforme à l'invention peut également bloquer, notamment suite à un ordre donné, l'accès 2 d'un entrepôt 3 d'un tout autre type tel que, par exemple, un fourgon, un camion, un container maritime ou encore un local d'un bâtiment.

Le dispositif 1 est avantageusement amovible et comporte au moins :
- un châssis 6 agencé pour reposer sur le plancher 21 de l'accès de la remorque 3, ledit châssis 6 étant en forme globale de parallélépipède verticalement allongé de section horizontale en forme générale de quadrilatère, de préférence du type carré,
- deux volets arrière 7 solidaires chacun le long d'un des deux bords verticaux arrière 61 du châssis 6 et mobile entre une position "déployés" dans laquelle lesdits volets arrière 7 s'étendent sensiblement perpendiculairement aux faces latérales 62 dudit châssis 6 et une position "rétractés" dans laquelle lesdits volets arrière 7 ne s'étendent pas sensiblement perpendiculairement auxdites faces latérales 62 et,
- des moyens d'arrimage arrière 8 permettant de maintenir les volets arrière 7 en position "déployés" et d'immobiliser ledit châssis 6 par rapport à ladite remorque 3, et plus particulièrement par rapport aux parois 23 verticales opposées et/ou au plafond de l'accès 2 de ladite remorque 3 entre lesquelles le dispositif 1 est disposé.

Selon un mode de réalisation avantageux, le dispositif 1 comporte en outre :
- deux volets avant 9 avantageusement semblables aux volets arrière 7 et solidaires chacun le long d'un des deux bords verticaux avant 63 dudit châssis 6 et mobile entre une position "déployés" dans laquelle lesdits volets avant 9 s'étendent sensiblement perpendiculairement aux faces latérales 62 dudit châssis 6 et une position "rétractés" dans laquelle lesdits volets avant 9 ne s'étendent sensiblement pas perpendiculairement auxdites faces latérales 62, et
- des moyens 10 permettant de maintenir les volets avant 9 en position "déployés" et d'immobiliser ledit châssis 6 par rapport à ladite remorque 3, et plus particulièrement par rapport aux parois 23 verticales opposées et/ou au plafond de l'accès 2 de ladite remorque 3 entre lesquelles le dispositif 1 est disposé.

Les volets arrière 7 et avant 9 sont de préférence articulés chacun le long d'un des deux bords verticaux arrière 62 respectivement avant 63 dudit châssis 6.

Toutefois, lesdits volets arrière 7 et avant 9 pourront d'un tout autre type sans sortir du cadre de la présente invention. Ainsi, ils pourront être coulissants, enroulables, repliables par exemple de façon sectionnelle, ou encore rapportés par emboitement ou par empilement.

De même, les moyens d'arrimage arrière 8 et avant 10 sont de préférence des bras d'arrimage arrière 81 et avant 101 agencés pour être déployés transversalement depuis une des faces latérales 62 du châssis 6 pour venir en appui contre l'une des parois 23 verticales de l'accès 2 afin d'immobiliser le dispositif 1 dans l'accès 2, et maintenir respectivement les volets arrière 7 et avant 9 en position "déployés". On désigne ici par "agencés pour être déployés transversalement" le fait que, pour immobiliser le dispositif 1 par rapport à la remorque 3, les deux bras d'arrimage arrière 81 et avant 101 sont agencés pour s'étendre depuis le châssis 6 à proximité de préférence de ses bords verticaux arrière 61 et avant 63 vers les parois 23 verticales de l'accès 2 de ladite remorque 3 selon une direction perpendiculaire auxdites faces latérales 62 du châssis 6.Ainsi, lesdits bras d'arrimage arrière 81 et avant 101 passent d'une position "étendus" dans laquelle ils s'étendent depuis le châssis 6 vers les parois 23 verticales de l'accès 2 de ladite remorque 3 à une position "rétractés" dans laquelle ils sont rabattus et/ou solidarisés contre et/ou dans ledit châssis 6.

Par ailleurs, on comprend bien que, pour immobiliser le dispositif 1 par rapport à ladite remorque 3, il faut que les bras d'arrimage arrière 81 et avant 101 se déploient jusqu'à venir en appui contre les parois 23 verticales opposées de l'accès 2 de ladite remorque 3.

De même, on comprend bien que cette configuration permet, d'une part, de garantir la stabilité et la parfaite immobilisation du dispositif 1 entre lesdites parois 23 verticales de l'accès 2 de la remorque 3 en proposant quatre appuis contre lesdites parois 23 verticales et, d'autre part, de créer une double barrière disposée à l'avant et à l'arrière dudit dispositif 1 et formant un sas entre les deux paires de volets arrière 7 et avant 9 (cf. figue 1).

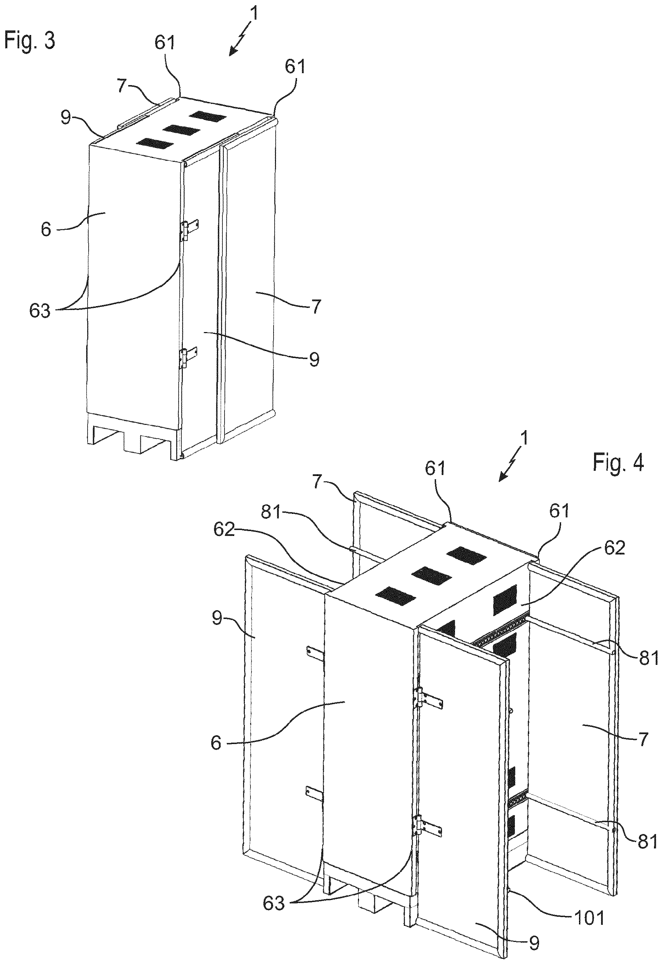

Pour renforcer encore la stabilité et la parfaite immobilisation du dispositif 1 entre les parois 23 verticales de l'accès 2 de la remorque 3 du véhicule 3, ledit dispositif 1 pourra comporter plus de quatre bras d'arrimage. Ainsi, en référence aux figures 1 et 4, le dispositif 1 comporte quatre bras d'arrimage arrière 81 et quatre bras d'arrimage avant 101 répartis en haut et en bas du châssis 6 à proximité respectivement de ses bords verticaux arrière 61 et avant 63.

Lesdits bras d'arrimage arrière 81 et avant 101 peuvent par conséquent être télescopiques, coulissants, fixés de façon amovible sur le châssis 6, articulés audit châssis 6, traversant le châssis 6 de part en part et s'étendant de part et d'autre de ce dernier, ou encore une combinaison des différents modes de réalisation précédents.

Selon une mode de réalisation avantageux, les bras d'arrimage arrière 81 et avant 101 sont des tubes creux ou non rapportés et fixés de façon démontable par l'une de leurs extrémités sur le châssis 6 et plus particulièrement dans des orifices 64 aménagés dans une barre 65 dudit châssis 6.

De plus, les bras d'arrimage arrière 81 et avant 101 sont de préférence associés à des organes d'interface 11 fixées sur la structure de la remorque 3 le long de chacune des parois 23 verticales de l'accès 2. Lesdits organes d'interface 11 sont aptes à coopérer les extrémités libres desdits bras d'arrimage arrière 81 et avant 101, afin d'assurer l'immobilisation dudit dispositif 1 entre lesdites parois 23 verticales, même lorsque ses dernières sont un peu flexibles comme dans le mode de réalisation décrit d'une remorque 3.

Selon un mode de réalisation avantageux, les organes d'interface 11 sont des barres fixées sur la structure de la remorque 3 le long de chacune des parois 23 verticales de l'accès 2 et munies d'orifices 12, et chacun desdits bras d'arrimage arrière 81 et avant 101 comporte à son extrémité libre un doigt d'indexage rétractable, non représenté sur les figures, à apte à s'insérer dans l'un des orifices 12 de l'organe d'interface 11 associé, ledit doigt d'indexage étant associé à un ressort de rappel tendant à le maintenir non rétracté.

Chacun des volets arrière 7 et avant 9 comporte des éléments de fixation, non représentés sur les figures, permettant d'immobiliser lesdits volets arrière 7 ou avant 9 en appui contre respectivement les bras d'arrimage arrière 81 ou avant 101, lorsque ces derniers sont déployés transversalement de part et d'autre du dispositif 1. Ces éléments de fixation peuvent être, par exemple, du type boulons, vis ou encore goupilles.

Lesdits moyens d'arrimage arrière 8 et avant 10 pourront d'un tout autre type que des bras 81, 101, sans sortir du cadre de la présente invention. Ainsi, ils pourront comporter des bras indépendants du châssis 6 et mis en place entre les parois 23 verticales de l'accès 2 et/ou entre le plancher 21 et le plafond de ce dernier, des sangles, un filet, ou encore un dispositif de verrouillage intégré à chacun des volets arrière 7 et avant 9 et permettant de se reprendre aux parois 23 verticales opposées et/ou au plafond de l'accès 2 de ladite remorque 3.

Par ailleurs, le bord vertical libre de chacun des volets arrière 7 et avant 9 comporte de préférence un organe déformable du type, par exemple, lèvre en caoutchouc pour éviter tout contact direct avec les parois 23 verticales de l'accès 2 de la remorque 3 pouvant occasionner la dégradation desdits volets arrière 7 et avant 9, puisque la structure d'une remorque 3 subit toujours des déformations importantes, lors de son déplacement.

Une fois mis en place, le sas ainsi formé par le dispositif 1 va déterminer un espace 13 clos de part et d'autre du dispositif 1 entre les volets arrière 7 et avant 9 et les parois 23 verticales de l'accès 2 entre lesquelles le dispositif 1 est disposé.

Dans le cas d'un configuration minimale du dispositif 1 avec un châssis 6 et uniquement deux volets arrière 7 associés à des moyens d'arrimage arrière 8, on comprend bien que la porte d'entrée 5 de la remorque 3 feront office de volets avant 10 et permettront de déterminer un espace 13 clos dudit sas. De manière avantageuse, le dispositif 1 a la forme d'une charge palettisée de manière à ce que la réduction de la capacité de transport sur la remorque 3 ne corresponde au plus qu'à l'encombrement d'une seule palette. Pour ce faire, les dimensions hors-tout du dispositif 1 ne dépasseront avantageusement pas les dimensions hors-tout au sol d'une palette européenne standard du type EPAL, à savoir : 800 millimètres de largeur et 1200 millimètres de profondeur.

Toutefois, si le dispositif 1 doit protéger des palettes de 1200 millimètres de profondeur, il est possible que son encombrement dans la largeur soit supérieur à 1200 millimètres à cause des volets arrière 7 et avant 9.

De manière optionnelle, le dispositif 1 peut en outre comporter l'un des moyens techniques suivants:
- des moyens de leurres tels que, par exemple, des fausses serrures disposées sur le dispositif 1,
- des moyens de dissuasion tels que, par exemple, des moyens d'émission d'un jet tâchant ou incorporant un traceur,
- des moyens de retardement pour ralentir un voleur voulant accéder aux marchandises 4, ou gêner la manipulation desdites marchandises 4 ou du dispositif 1 lui-même, ces moyens de retardement pourront, par exemple, être des générateurs de brouillard, des générateurs de mousse expansive durcissable, des parois expansibles pneumatiquement qui créent une pression sur les parois 23 verticales de l'accès 2 de la remorque 3 de sorte à empêcher la manipulation dudit dispositif 1, ou encore des parois du type guillotine permettant d'interdire le passage des fourches du transpalette sous le dispositif 1 pour éviter son déplacement,
- des moyens de suivi tels que, par exemple des balises de géolocalisation,
- des moyens de communication par ondes radio par exemple,
- des moyens d'autonomie d'énergie, par exemple, du type batterie ou accumulateur rechargeable ou non,
- des moyens d'alimentation énergétique, par exemple, du type câble pour amener la puissance électrique vers le dispositif 1, charger ou prendre le relai des moyens d'autonomie d'énergie, ou encore
- des moyens d'interface permettant l'échange d'information filaire ou non avec le dispositif 1 afin notamment d'armer du dispositif 1, de vérifier le niveau de charge des moyens d'autonomie d'énergie, ou encore de commander le déclenchement du dispositif 1.

Les différents moyens techniques précédemment décrits pourront ne pas être solidaires du châssis 6 du dispositif 1 et être déportés. Ainsi, dans le cas d'un entrepôt 3 du type conteneur maritime métallique, les moyens de communication seront avantageusement déportés.

Par ailleurs, le dispositif 1 pourra comporter des grilles disposées, non représentées, sur les parois 23 verticales de l'accès 2 et/ou sur les plancher 21 et plafond de ce dernier, lesdites grilles permettant, en cas de projection de mousse expansive durcissable, de rendre encore plus difficile l'ouverture de la porte d'entrée 5 de la remorque 3 et le retrait dudit dispositif 1. Pour mettre en place le dispositif 1 ainsi configuré, on procède de préférence de la manière suivante :
- mise en place du dispositif 1 au niveau de l'accès 2 d'une remorque 3 si ladite remorque 3 est presque entièrement remplie de palettes 14 recevant des marchandises 4 ou si la remorque 3 est presque vide après la dernière rangée de palette ayant des marchandises de valeurs à protéger, dans le cas d'une remorque 3 presque entièrement remplie, la dernière rangée de palettes du côté de la porte d'entrée 5 de la remorque 3 est laissée libre pour recevoir ledit dispositif 1 disposé à égale distance des parois 23 verticales de l'accès 2 de ladite remorque 3,
- armement du dispositif 1,
- déploiement des deux volets arrière 7 de part et d'autre du châssis 6 du dispositif 1, ces derniers occultant alors la totalité des palettes situées derrière eux,
- déploiement des bras d'arrimages arrière 81 de part et d'autre du châssis 6 du dispositif 1, ce dernier étant alors maintenu centré entre les deux parois 23 verticales de l'accès 2 de ladite remorque 3, il reste alors de part et d'autre du dispositif 1 devant lesdits volets arrière 7 de la place pour disposer, le cas échéant, une palette portant des marchandises ou pour faisant office de leurre,
- déploiement de part et d'autre du châssis 6 du dispositif 1 devant lesdites palettes des bras d'arrimages avant 101, puis des deux volets avant 9 de manière à sécuriser lesdites palettes qui se trouvent de fait au centre de l'espace clos 13 d'un sas formé par les volets arrière 7 et avant 9 du dispositif 1 en position "blocage", ledit espace clos 13 pouvant être rempli, le cas échéant, par les produits projetés par les moyens de retardement, en cas d'intrusion ou de tentative d'intrusion non autorisée dans la remorque 3 du véhicule 3.

Dans le cas de la mousse durcissable projetée par les moyens de retardement dans ledit espace clos 13, cette dernière sera avantageusement projetée en priorité vers les fixations des bras d'arrimage arrière 7 et avant 9, et les palettes grâce à des buses judicieusement disposées.

On désigne ici par "armement" le fait que le dispositif 1 selon l'invention est apte à réagir en cas d'intrusion ou de tentative d'intrusion non autorisée dans la remorque 3 par la porte d'entrée 5 en déclenchant notamment les moyens de retardement afin de ralentir un voleur voulant accéder aux marchandises de valeur contenue dans la remorque 3.

Enfin, on comprend bien que l'homme du Métier n'aura aucune difficulté pour dimensionner le châssis 6 et les volets arrière 7 et avant 9 du dispositif 1 pour interdire l'accès aux marchandises 4 en passant entre le dispositif 1 et le plafond ou les parois verticales 23 de l'accès 2 de la remorque 3.

Par ailleurs, l'homme du Métier n'aura aucune difficulté pour dimensionner en hauteur le dispositif 1 par rapport à la hauteur du plafond de l'accès 2 de la remorque 3 pour éviter le basculement dudit dispositif 1 par tentative d'arrachement.

### Description d'autres modes de réalisation

Selon une variante de réalisation non représentée, le dispositif 1 est disposé sur un côté de la remorque 3, le châssis contre l'une des parois de l'accès de ladite remorque, et ne comporte qu'un volet arrière, et des moyens d'arrimage arrière, ces différents éléments du dispositif 1 ne se déployant alors qu'un côté du châssis, celui qui n'est pas contre ladite paroi de l'accès de ladite remorque.

Cette configuration un peu "extrême" présente l'inconvénient de devoir renforcer mécaniquement les volets arrière et avant et les bras d'arrimage arrière et avant, car ces éléments seront alors de plus grandes dimensions.

Dès lors, on comprend bien que cette configuration est particulièrement adaptée aux entrepôts munis d'un accès étroit.

### Possibilité d'application industrielle

Le dispositif 1 de condamnation selon l'invention s'applique plus particulièrement à la protection des marchandises 4 stockées et/ou transportées dans un entrepôt 3 du type remorque 3, mais il peut également être mis en œuvre pour bloquer un accès 2 d'un entrepôt 3 du type local d'un bâtiment destiné au stockage de marchandises 4.

Enfin, il va de soi que les exemples de dispositif 1 conformes à l'invention qui viennent d'être décrits ne sont que des illustrations particulières, en aucun cas limitatives de l'invention.

## Revendications

1. Dispositif (1) de blocage d'un accès (2) à un entrepôt (3) contenant des marchandises (4) de valeur, ledit accès (2) étant disposé derrière la porte d'entrée (5) dudit entrepôt (3) et comportant au moins un plancher (21) et deux parois (23) verticales opposées, ledit dispositif (1) étant **caractérisé en ce qu'**il comporte au moins :
- un châssis (6) agencé pour reposer sur ledit plancher (21) entre lesdites parois (23) verticales,
- un volet arrière (7) solidaire de l'arrière d'une des faces latérales (62) du châssis (6) et mobile entre une position "déployé" dans laquelle chaque volet arrière (7) s'étend sensiblement perpendiculairement à ladite face latérales (62) et une position "rétracté" dans laquelle chaque volet arrière (7) ne s'étend pas sensiblement perpendiculairement à ladite face latérale (62) et,
- des moyens d'arrimage arrière (8) permettant de maintenir chaque volet arrière (7) en position "déployé" et d'immobiliser ledit châssis (6) par rapport à l'accès (2) dudit entrepôt (3),
ledit dispositif (1) étant, lorsque chaque volet arrière (7) est en position "rétracté", en configuration "passage" libérant l'accès (2) et, lorsque ledit volet arrière (7) est en position "déployé", en configuration "blocage" bloquant l'accès (2) et formant un sas.

2. Dispositif (1) selon la revendication 1 **caractérisé en ce qu'**il comporte au moins :
- un volet avant (9) solidaire de l'avant de ladite face latérale (62) et mobile entre une position "déployé" dans laquelle chaque volet avant (9) s'étend sensiblement perpendiculairement à ladite face latérale (62) et une position "rétracté" dans laquelle chaque volet avant (9) ne s'étend pas sensiblement perpendiculairement à ladite face latérale (62) et,
- des moyens d'arrimage avant (10) permettant de maintenir chaque volet avant (9) en position "déployé" et d'immobiliser ledit châssis (6) par rapport à l'accès (2) dudit entrepôt (3),
ledit dispositif (1) étant, lorsque lesdits volets arrière (7) et avant (9) sont en position "rétractés", en configuration "passage" libérant l'accès (2) et, lorsque lesdits volets arrière (7) et avant (9) sont en position "déployés", en configuration "blocage" bloquant l'accès (2) et formant un sas entre lesdits volets arrière (7) et avant (9).

3. Dispositif (1) selon les revendications 1 et 2 **caractérisé en ce qu'**il comporte :
- deux volets arrière (7) solidaires chacun de l'arrière d'une des faces latérales (62) du châssis (6)
- deux volets avant (9) solidaires chacun de l'avant d'une des faces latérales (62) du châssis (6).

4. Dispositif (1) selon l'une quelconque des revendications 1 à 3 **caractérisé en ce que** les volets arrière (7) et/ou avant (9) sont articulés chacun respectivement le long d'un des deux bords verticaux arrière (62) et/ou avant (63) dudit châssis (6) et **en ce que** les moyens d'arrimage arrière (8) et/ou avant (10) sont des bras d'arrimage arrière (81) et avant (101) agencés pour être déployés transversalement depuis une des faces latérales (62) du châssis (6) pour venir en appui contre l'une des parois (23) verticales de l'accès (2) afin d'immobiliser le dispositif (1) dans l'accès (2), et maintenir respectivement les volets arrière (7) et avant (9) en position "déployés".

5. Dispositif (1) selon la revendication 4 **caractérisé en ce qu'**il comporte quatre bras d'arrimage arrière (81) et quatre bras d'arrimage avant (101) répartis en haut et en bas du châssis (6) à proximité respectivement de ses bords verticaux arrière (61) et avant (63).

6. Dispositif (1) selon l'une quelconque des revendications 4 ou 5 **caractérisé en ce que** les bras d'arrimage arrière (81) et avant (101) sont des tubes creux ou non rapportés et fixés de façon démontable par l'une de leurs extrémités sur les faces latérales (62) du châssis (6) et plus particulièrement dans des orifices (64) aménagés dans une barre (65) dudit châssis (6).

7. Dispositif (1) selon l'une quelconque des revendications 4 à 6 **caractérisé en ce que** les bras d'arrimage arrière (81) et avant (101) sont télescopiques, coulissants, articulés audit châssis (6), traversant le châssis (6) de part en part et s'étendant de part et d'autre de ce dernier, ou encore une combinaison des différents modes de réalisation précédents.

8. Dispositif (1) selon l'une quelconque des revendications 4 à 7 **caractérisé en ce que** les bras d'arrimage arrière (81) et avant (101) sont associés à des organes d'interface (11) fixés sur la ou les parois (23) de l'accès (2) et aptes à coopérer avec les extrémités libres desdits bras d'arrimage arrière (81) et avant (101), **en ce que** les organes d'interface (11) sont des barres munies d'orifices (12) et **en ce que** chacun desdits bras d'arrimage arrière (81) et avant (101) comporte à son extrémité libre un doigt d'indexage rétractable apte à s'insérer dans l'un des orifices (12) de l'organe d'interface (11) associé, ledit doigt d'indexage étant associé à un ressort de rappel tendant à le maintenir non rétracté.

9. Dispositif (1) selon l'une quelconque des revendications 1 à 8 **caractérisé en ce que** le bord vertical libre de chacun des volets arrière (7) et/ou avant (9) comporte un organe déformable pour éviter tout contact direct avec les parois (23) verticales de l'accès (2).

10. Dispositif (1) selon l'une quelconque des revendications 1 à 9 **caractérisé en ce qu'**il comporte au moins l'un des moyens techniques suivants:
- des moyens de leurres,
- des moyens de dissuasion,
- des moyens de retardement pour ralentir un voleur voulant accéder aux marchandises (4), ou gêner la manipulation desdites marchandises (4) ou du dispositif (1) lui-même,
- des moyens de suivi,
- des moyens de communication,
- des moyens d'autonomie d'énergie,
- des moyens d'alimentation énergétique, ou encore
- des moyens d'interface permettant l'échange d'information filaire ou non avec le dispositif (1).

11. Dispositif (1) selon la revendication 10 **caractérisé en ce qu'**il est apte, en position "blocage", à être armé pour réagir, en cas d'intrusion ou de tentative d'intrusion non autorisée dans l'entrepôt (3) par la porte d'entrée (5), en déclenchant les moyens de retardement, afin de ralentir un voleur voulant accéder aux marchandises (4) contenue dans l'entrepôt (3).

12. Dispositif (1) selon l'une quelconque des revendications 1 à 11 **caractérisé en ce qu'**il a la forme globale d'un parallélépipède verticalement allongé disposé sur une palette dont les dimensions hors-tout au sol ne dépassent pas celles d'une palette européenne standard.

## Patentansprüche

1. Vorrichtung (1) zum Sperren eines Zugangs (2) zu einem Lager (3), das wertvolle Güter (4) enthält, wobei der Zugang (2) hinter der Eingangstür (5) des Lagers (3) angeordnet ist und wenigstens einen Boden (21) und zwei gegenüberliegende vertikale Wände (23) umfasst, wobei die Vorrichtung (1) **dadurch gekennzeichnet ist, dass** sie wenigstens umfasst:
- einen Rahmen (6), der angeordnet ist, um auf dem Boden (21) zwischen den vertikalen Wänden (23) aufzuliegen,
- einen hinteren Flügel (7), der mit dem Hinterteil einer der Seitenflächen (62) des Rahmens (6) fest verbunden ist und beweglich ist zwischen einer "ausgefahrenen" Position, in der sich jeder hintere Flügel (7) im Wesentlichen senkrecht zu der Seitenfläche (62) erstreckt, und einer "zurückgezogenen" Position, in der sich jeder hintere Flügel (7) im Wesentlichen nicht senkrecht zu der Seitenfläche (62) erstreckt, und
- hintere Kopplungsmittel (8), die es ermöglichen, jeden hinteren Flügel (7) in der "ausgefahrenen" Position zu halten und den Rahmen (6) in Bezug auf den Zugang (2) des Lagers (3) zu blockieren,
wobei sich die Vorrichtung (1), wenn sich jeder hintere Flügel (7) in der "zurückgezogenen" Position befindet, in einer "Durchgangs"-Ausgestaltung befindet, die den Zugang (2) freigibt, und wenn sich der hintere Flügel (7) in der "ausgefahrenen" Position befindet, in einer "Sperr"-Ausgestaltung, die den Zugang (2) sperrt und einen Sicherheitsschleusen bildet.

2. Vorrichtung (1) nach Anspruch 1, **dadurch gekennzeichnet, dass** sie wenigstens umfasst:
- einen vorderen Flügel (9), der mit dem Vorderteil der Seitenfläche (62) fest verbunden ist und beweglich ist zwischen einer "ausgefahrenen" Position, in der sich jeder vordere Flügel (9) im Wesentlichen senkrecht zu der Seitenfläche (62) erstreckt, und einer "zurückgezogenen" Position, in der sich jeder vordere Flügel (9) im Wesentlichen nicht senkrecht zu der Seitenfläche (62) erstreckt, und
- vordere Kopplungsmittel (10), die es ermöglichen, jeden vorderen Flügel (9) in der "ausgefahrenen" Position zu halten und den Rahmen (6) in Bezug auf den Zugang (2) des Lagers (3) zu blockieren,
wobei sich die Vorrichtung (1), wenn sich die hinteren (7) und vorderen (9) Flügel in der "zurückgezogenen" Position befinden, in einer "Durchgangs"-Ausgestaltung befindet, die den Zugang (2) freigibt, und wenn sich die hinteren (7) und vorderen (9) Flügel in der "ausgefahrenen" Position befinden, in einer "Sperr"-Ausgestaltung, die den Zugang (2) sperrt und einen Sicherheitsschleusen zwischen den hinteren (7) und vorderen (9) Flügeln bildet.

3. Vorrichtung (1) nach den Ansprüchen 1 und 2, **dadurch gekennzeichnet, dass** sie umfasst:
- zwei hintere Flügel (7), die jeweils mit dem Hinterteil einer der Seitenflächen (62) des Rahmens (6) fest verbunden sind,
- zwei vordere Flügel (9), die jeweils mit dem Vorderteil einer der Seitenflächen (62) des Rahmens (6) fest verbunden sind.

4. Vorrichtung (1) nach einem der Ansprüche 1 bis 3, **dadurch gekennzeichnet, dass** die hinteren (7) und/oder vorderen (9) Flügel jeweils entlang eines jeweiligen der zwei vertikalen hinteren (62) und/oder vorderen (63) Ränder des Rahmens (6) angelenkt sind und **dadurch, dass** die hinteren (8) und/oder vorderen (10) Kopplungsmittel hintere (81) und vordere (101) Kopplungsarme sind, die angeordnet sind, um ausgehend von einer der Seitenflächen (62) des Rahmens (6) quer ausgefahren zu werden, um gegen eine der vertikalen Wände (23) des Zugangs (2) zu drücken, damit die Vorrichtung (1) in de Zugang (2) blockiert wird, und die hinteren (7) und vorderen (9) Flügel jeweils in der "ausgefahrenen" Position zu halten.

5. Vorrichtung (1) nach Anspruch 4, **dadurch gekennzeichnet, dass** sie vier hintere Kopplungsarme (81) und vier vordere Kopplungsarme (101) umfasst, die oben und unten am Rahmen (6) jeweils in der Nähe seiner hinteren (61) und vorderen (63) vertikalen Ränder verteilt sind.

6. Vorrichtung (1) nach einem der Ansprüche 4 oder 5, **dadurch gekennzeichnet, dass** die hinteren (81) und vorderen (101) Kopplungsarme Rohre sind, die hohl oder nicht angestückt und abnehmbar über eines ihrer Enden auf den Seitenflächen (62) des Rahmens (6) und insbesondere in Öffnungen (64) befestigt sind, die in einer Stange (65) des Rahmens (6) eingerichtet sind.

7. Vorrichtung (1) nach einem der Ansprüche 4 bis 6, **dadurch gekennzeichnet, dass** die hinteren (81) und vorderen (101) Kopplungsarme teleskopisch, gleitend, an dem Rahmen (6) angelenkt, den Rahmen (6) durchgehend querend und sich beidseitig von diesem erstreckend oder auch eine Kombination der vorstehenden unterschiedlichen Ausführungsformen sind.

8. Vorrichtung (1) nach einem der Ansprüche 4 bis 7, **dadurch gekennzeichnet, dass** die hinteren (81) und vorderen (101) Kopplungsarme Schnittstellenorganen (11) zugeordnet sind, die auf der oder den Wänden (23) des Zugangs (2) befestigt sind und fähig sind, mit den freien Enden der hinteren (81) und vorderen (101) Kopplungsarme zusammenzuwirken, und **dadurch, dass** die Schnittstellenorgane (11) Stangen sind, die mit Öffnungen (12) versehen sind, und **dadurch, dass** jeder der hinteren (81) und vorderen (101) Kopplungsarme an seinem freien Ende einen zurückziehbaren Indexierfinger umfasst, der fähig ist, sich in eine der Öffnungen (12) des zugeordneten Schnittstellenorgans (11) einzufügen, wobei der Indexierfinger einer Rückstellfeder zugeordnet ist, die dazu neigt, ihn nicht zurückgezogen zu halten.

9. Vorrichtung (1) nach einem der Ansprüche 1 bis 8, **dadurch gekennzeichnet, dass** der freie vertikale Rand jedes der hinteren (7) und/oder vorderen (9) Flügel ein verformbares Organ umfasst, um jeglichen direkten Kontakt mit den vertikalen Wänden (23) des Zugangs (2) zu vermeiden.

10. Vorrichtung (1) nach einem der Ansprüche 1 bis 9, **dadurch gekennzeichnet, dass** sie wenigstens eines der folgenden technischen Mittel umfasst:
- Attrappenmittel,
- Abschreckungsmittel,
- Verzögerungsmittel, um einen Dieb, der auf die Güter (4) zugreifen möchte, zu verlangsamen oder das Hantieren mit den Gütern (4) oder der Vorrichtung (1) selbst zu stören,
- Verfolgungsmittel,
- Kommunikationsmittel,
- Mittel für Energieautonomie,
- Mittel zur Energieversorgung oder auch
- Schnittstellenmittel, die den Informationsaustausch, kabelgebunden oder nicht, mit der Vorrichtung (1) ermöglichen.

11. Vorrichtung (1) nach Anspruch 10, **dadurch gekennzeichnet, dass** sie fähig ist, in der "Sperr"-Position, scharfgemacht zu werden, um, im Fall eines Einbruchs oder eines nicht gestatteten Versuchs eines Einbruchs in das Lager (3) durch die Eingangstür (5), zu reagieren, indem die Verzögerungsmittel ausgelöst werden, um einen Dieb zu verlangsamen, der auf die Güter (4), die in dem Lager (3) enthalten sind, zugreifen möchte.

12. Vorrichtung (1) nach einem der Ansprüche 1 bis 11, **dadurch gekennzeichnet, dass** sie die allgemeine Form eines vertikal gestreckten Quaders aufweist, der auf einer Palette angeordnet ist, deren Gesamtabmessungen am Boden jene einer standardmäßigen Europlatte nicht übersteigen.

## Claims

1. Device (1) for blocking an access (2) to a storage location (3) containing valuable goods (4), said access (2) being disposed behind the entrance door (5) of said storage location (3) and comprising at least a floor (21) and two opposing vertical walls (23), said device (1) being **characterised in that** it comprises at least:
- a frame (6) arranged to rest on said floor (21) between said vertical walls (23),
- a rear panel (7) secured to the rear of one of the side faces (62) of the frame (6) and movable between a "deployed" position in which each rear panel (7) extends substantially perpendicular to said side faces (62) and a "retracted" position in which each rear panel (7) does not extend substantially perpendicular to said side face (62) and,
- rear securing means (8) for holding each rear panel (7) in the "deployed" position and immobilise said frame (6) relative to the access (2) of said storage location (3),
said device (1) being, when each rear panel (7) is in the "retracted" position, in a "passage" configuration releasing the access (2) and, when said rear panel (7) is in the "deployed" position, in a "blocking" configuration, blocking the access (2) and forming an security barrier.

2. Device (1) according to claim 1, **characterised in that** it comprises at least
- a front panel (9) secured to the front of said side face (62) and movable between a "deployed" position in which each front panel (9) extends substantially perpendicular to said side face (62) and a "retracted" position in which each front panel (9) does not extend substantially perpendicular to said side face (62) and,
- front securing means (10) for holding each front panel (9) in the "deployed" position and immobilise said frame (6) relative to the access (2) of said storage location (3),
said device (1) being, when said rear (7) and front (9) panels are in the "retracted" position, in a "passage" configuration releasing the access (2) and, when said rear (7) and front (9) panels are in the "deployed" position, in a "blocking" configuration, blocking the access (2) and forming an security barrier between said rear panel (7) and front panel (9).

3. Device (1) according to claims 1 and 2, **characterised in that** it comprises:
- two rear panels (7) each secured to the rear of one of the side faces (62) of the frame (6)
- two front panels (9) each secured to the front of one of the side faces (62) of the frame (6).

4. Device (1) according to any one of claims 1 to 3, **characterised in that** the rear (7) and/or front (9) panels are each respectively articulated along one of the two vertical rear (62) and/or front (63) edges of said frame (6) and **in that** the rear (8) and/or front (10) securing means are rear (81) and front (101) securing arms designed to be transversely deployed from one of the side faces (62) of the frame (6) in order to bear against one of the vertical walls (23) of the access (2) in order to immobilise the device (1) in the access (2), and respectively holding the rear (7) and front (9) panels in the "deployed" position.

5. Device (1) according to claim 4, **characterised in that** it comprises four rear securing arms (81) and four front securing arms (101) distributed at the top and bottom of the frame (6) respectively in the vicinity of its rear (61) and front (63) vertical edges.

6. Device (1) according to claims 4 or 5, **characterised in that** the rear (81) and front (101) securing arms are hollow or not-hollow tubes, attached and fixed in a removable manner by one of their ends on the side faces (62) of the frame (6) and, more particularly, in openings (64) arranged in a bar (65) of said frame (6).

7. Device (1) according to any one of claims 4 to 6, **characterised in that** the rear (81) and front (101) securing arms are telescopic, sliding, articulated with said frame (6), passing right through the frame (6) and extending on either side of the latter, or even a combination of the various preceding embodiments.

8. Device (1) according to any one of claims 4 to 7, **characterised in that** the rear (81) and front (101) securing arms are associated with interface members (11) fixed on the wall or walls (23) of the access (2) and able to interact with the free ends of said rear (81) and front (101) securing arms, **in that** the interface members (11) are bars provided with openings (12) and **in that** each of said rear (81) and front (101) securing arms comprises, at its free end, a retractable indexing finger capable of inserting in one of the openings (12) of the associated interface member (11), said indexing finger being associated with a return spring tending to hold it non-retracted.

9. Device (1) according to any one of claims 1 to 8, **characterised in that** the vertical free edge of each of the rear (7) and/or front (9) panels comprises a deformable member for preventing any direct contact with the vertical walls (23) of the access (2).

10. Device (1) according to any one of claims 1 to 9, **characterised in that** it comprises at least one of the following technical means:
- decoy means,
- deterrence means,
- means for delaying or slowing down a thief wishing to access the goods (4), or hampering the handling of said goods (4) or of the device (1) itself,
- monitoring means,
- communication means,
- energy autonomy means
- energy supply means, or
- interface means enabling wired or wireless exchange of information with the device (1).

11. Device (1) according to claim 10, **characterised in that** it is capable, in the "blocking" position, of being armed in order to react, in the event of unauthorised intrusion or attempted intrusion into the storage location (3) via the entrance door (5), by triggering delaying means, in order to slow down a thief wishing to access the goods (4) contained in the storage location (3).

12. Device (1) according to any one of claims 1 to 11, **characterised in that** it has the overall shape of a vertically elongated parallelepiped disposed on a pallet, the overall dimensions of which on the ground do not exceed those of a European standard pallet.
